Europäisches Patentamt

European Patent Office

Office européen des brevets

(19)

(11) Publication number: **0 072 165**
A1

(12) **EUROPEAN PATENT APPLICATION**

(21) Application number: **82304046.4**

(22) Date of filing: **30.07.82**

(51) Int. Cl.³: **C 08 F 10/02, C 08 F 4/62**

(30) Priority: **30.07.81 JP 120541/81**

(43) Date of publication of application: **16.02.83**
**Bulletin 83/7**

(84) Designated Contracting States: **DE FR NL**

(71) Applicant: **SUMITOMO CHEMICAL COMPANY, LIMITED,**
**15 Kitahama 5-chome Higashi-ku, Osaka-shi Osaka-fu**
**(JP)**

(72) Inventor: **Tomura, Yasushi, 17-2-510, Masago 3-chome,**
**Chiba (JP)**
Inventor: **Tanaka, Hisao, 9 Yushidai 1-chome, Ichihara**
**Chiba (JP)**
Inventor: **Konaka, Tsutomu, 9 Yushudai 1-chome,**
**Ichihara Chiba (JP)**

(74) Representative: **Allard, Susan Joyce et al, BOULT,**
**WADE & TENNANT 27 Furnival street, London EC4A 1PQ**
**(GB)**

(54) **Improved process for preparing ethylene polymers.**

(57) A processs for preparing an ethylene polymer by polymerization of ethylene or its mixture with at least one other copolymerizable monomer at an elevated temperature under all elevated pressure, wherein the polymerization is carried out in the presence of an ionic polymerization catalyst in at least two autoclave reactors, including a first autoclave reactor and a second autoclave reactor which are connected in series by means of at least one connecting pipe and provided with a cooler thereon and the polymerization is initiated in the first autoclave reactor, the reaction mixture is discharged therefrom through the connecting pipe, cooled in the cooler and passed to the second autoclave reactor, and the polymerization is further continued therein.

EP 0 072 165 A1

IMPROVED PROCESS FOR PREPARING ETHYLENE POLYMERS

The present invention relates to an improved process for preparing an ethylene polymer. More particularly, it relates to an improved process for preparing an ethylene polymer by polymerization of ethylene or its mixture with at least one other copolymerizable monomer in the presence of an ionic polymerization catalyst at an elevated temperature under an elevated pressure in at least two autoclave reactors connected in series by means of a connecting pipe provided with a cooler.

It is known to obtain an ethylene polymer having good physical properties by the so-called high pressure process, i.e. by polymerizing ethylene or its mixture with at least one other copolymerizable monomer at a high temperature of from 130 to 350°C under a high pressure of 300 $kg/cm^2$ or more by the use of oxygen, peroxides or azo compounds which can easily produce active radicals.

Reactors to be used industrially for carrying out the above polymerization process are classified into two types, i.e. autoclave reactors and tubular reactors. Autoclave reactors are of substantially cylindrical or similar form and have a relatively large diameter, the ratio of the length to the diameter being 30 : 1 or less. On the other hand, tubular reactors are of substantially cylindrical form and have a relatively small diameter, the ratio of the length to the diameter being 300 to 40,000

: 1. The polymers produced by the use of these two types of reactors have ,respectively ,their own characteristics.

When ethylene or its mixture with at least one other copolymerizable monomer is polymerized in an autoclave reactor equipped with a stirrer, the one pass conversion to the polymer (percentage of the weight of the polymer produced per unit weight of the starting gaseous material supplied to the reactor) varies with the reaction temperature, the type and amount of the catalyst, etc., but in an industrial scale polymerization, it is largely dependent upon the heat balance in the autoclave reactor (cf. Japanese Patent Publication (examined) No. 15906/1979). Namely, since a large amount of reaction heat (e.g. 800 Kcal/kg) is generated in the polymerization reaction of ethylene or its mixture with at least one other copolymerizable monomer and the reaction heat is removed by the sensible heat difference between the temperature of the monomer(s) at the entrance of the reactor and the reaction temperature and the cooling from the outside of the reactor, the one pass conversion has a limit which is usually from 10 to 20 % by weight.

In order to increase such limited one pass conversion and improve productivity, some improved processes have been proposed of which a typical one is disclosed in Japanese Patent Publication (examined) No. 19599/1975. In this process, the polymerization of ethylene or its mixture with at least one copolymerizable monomer is carried out in two autoclave reactors connected in series by means of a connecting pipe provided with a cooler.  Thus, the polymerization is first carried out in the first autoclave reactor, and the reaction mixture is discharged therefrom and passed through the connecting pipe where the reaction mixture is cooled by the cooler to a temperature of above $120^{\circ}C$ and of $20^{\circ}C$ or more below the temperature in the first autoclave reactor. The cooled reaction mixture is then passed to the second autoclave reactor where the polymerization is further continued.  The polymerization in this process is a  so-called radical polymerization utilizing oxygen, organic peroxides or azo compounds as the radical initiator.

When the polymerization is performed in an autoclave reactor(s) on an industrial scale, it may be considered as an adiabatic autothermal reaction, since the polymerization rate is very high, the residence time is short and the cooling surface area relative to the monomer(s) supplied to the reactor is small.  Therefore, the removal of reaction heat by cooling from the outside of the reactor is less effective than that by the sensible heat difference between the temperature of the monomer(s) supplied to the reactor(s) and the reaction temperature, and the reaction heat removal is therefore greatly dependent upon the latter.  It is thus necessary to select and use an autoclave reactor(s) having a ratio of length to diameter that enables the thorough mixing of the monomer(s) and the polymer and prevents the formation of any localized

·higher temperature region.  It is also necessary to stir the reaction mixture inside the reactor with a powerful stirrer, because insufficient stirring results in a wide temperature distribution in the reactor, whereby the localized accumulation of ·reaction heat occurs and an abnormal decomposition of ethylene takes place (cf. Chem. Ing. Tech., 50, 620 (1978)).

We have developed an improved process for the preparation of an ethylene polymer by polymerization of ethylene or its mixture with at least one other copolymerizable monomer at a temperature of not less than $130^{O}C$, preferably from 135 to $350^{O}C$, under a pressure of not less then 300 $kg/cm^{2}$, preferably from 350 to 3500 $kg/cm^{2}$, in the presence of an ionic polymerization catalyst such as a Ziegler type catalyst, which gives high one pass conversion and high productivity using a lesser amount of the catalyst and yet assures excellent operational stability.

Accordingly, the present invention provides a process for preparing an ethylene polymer by polymerization of ethylene or its mixture with at least one other copolymerizable monomer at an elevated temperature under an elevated pressure, wherein the polymerization is carried out in the presence of an ionic polymerization catalyst in at least two autoclave reactors, including a first autoclave reactor and a second autoclave reactor which are connected in series by means of at least one connecting pipe and provided with a cooler thereon and the polymerization is initiated in the first autoclave reactor, the reaction mixture is discharged therefrom through the connecting pipe, cooled in the cooler and passed to the second autoclave reactor, and the polymerization is further continued therein.

The ionic polymerization catalyst system preferably comprises (A) at least one metal compound of which the metal belongs to one of Groups I to III of the periodic table and (B) at least one transition metal halide in which the transition metal belongs to one of Groups IVa to VIa of the periodic table. Each autoclave reactor is preferably provided with a stirrer which can impart an energy of at least 0.02 KW, preferably at least 0.04 KW, per 1 liter of the inner volume of the reactor to the reaction mixture in the reactor. The autoclave reactors are each of substantially cylindrical form in which the ratio of length to diameter is from 1 : 1 to 25 : 1, preferably from 5 : 1 to 20 : 1. The residence time in the entire reaction system comprising the autoclave reactors and the connecting pipe(s) is generally kept within 350 seconds, preferably within 300 seconds, and the residence time in the connecting pipe(s) is generally kept within 25 seconds, preferably with 20 seconds. The reaction mixture discharged from the first autoclave reactor is preferably cooled to a temperature (T2), which is lower than the temperature (T1) at the outlet of the reactor and satisfies the following relationships:

$$280°C \leq T1 + T2 \leq 480°C$$
$$20°C \leq T1 - T2 \leq 220°C$$
$$130°C \leq T2;$$

and then the cooled mixture is passed to the second autoclave reactor to continue the polymerization with or without the addition of ethylene and/or the other copolymerizable monomer(s).

When the polymerization is carried out at high termerature under a high pressure in the presence of an ionic polymerization catalyst, the amount of the catalyst is required to be increased with the elevation of the reaction temperature. As a result, however, the polymer so produced is inferior in quality; for example, transparency and strength become unsatisfactory. Thus, it has been desired to decrease the amount of the catalyst and adopt a lower reaction temperature to prevent a deterioration in the quality of the polymer produced, and yet to achieve a high one pass conversion.

This can be attained by the present invention wherein two or more autoclave reactors including a first autoclave reactor and a second autoclave reactor, of which each has a certain specific ratio of length to diameter and is provided with a stirrer, are connected in series by means of at least one connecting pipe provided with a cooler(s), preferably a heat exchanger(s); compressed and cold monomer(s) are fed into the first autoclave reactor with a feed rate which enables the residence time in each part to be controlled within a specific range; polymerization is initiated by the addition of an ionic polymerization catalyst such as Ziegler type catalyst;the reaction mixture (i.e. a mixture of the polymer, the unreacted monomer(s), etc.) in which the predetermined conversion is attained by the utilization of the rise in the sensible heat of the cold gas is supplied to the second autoclave reactor; and the polymerization is continued with the addition of the ionic polymerization catalyst, with or without the addition of fresh monomer(s). Thus, the one pass conversion is much improved, and the operational stability is assured. Even when a solid ionic polymerization catalyst is employed, no abnormality is recognised in the temperature control of the autoclave reactors, the homogeneous or smooth temperature distribution in the autoclave reactors and the connecting pipe(s), etc.

When a single autoclave reactor is used or two or more autoclave reactors connected in series by means of a connecting pipe(s) but not provided with a cooler are employed it is necessary in order to attain a high one pass conversion as in the process of the invention to make the sensible heat difference greater by lowering the cold gas temperature or by raising the reaction temperature or to make the removal of heat from the outside of the reactor greater. Since, however, the heat removal from the outside of the reactor is not significant the sensible heat difference must be made greater to effect the heat removal. Thus, the addition of a cooling unit for lowering the temperature of the cold gas is needed. Furthermore, the rise of the reaction temperature produces various defects such as a great increase in the amount of
the ionic polymerization catalyst, a deterioration in the
quality of the polymer produced and a reduction in the
operational stability.

The reasons for establishing the specific reaction
conditions of the present invention have been found as a
result of extensive studies. These reasons are described
below.

The amount of the energy imparted by the stirrer
and the ratio of the length to diameter of each autoclave
reactor are both intended to achieve mixing of the reaction
mixture in the reactor homogeneously. Particularly when
an ionic polymerization catalyst is used in a solid state,
the achievement of homogeneous mixing is important, because
the catalyst is not dissolved in the reaction mixture and a
localized accumulation of the reaction heat tends to occur.
With regard to the stirrer, energy imparted to the reaction
mixture at a level of 0.02 KW or more per liter is the most
effective to ensure uniform mixing, although the shape
of the blades or paddles of the stirrer is also important.
When the ratio of the length to diameter of the reactor is
too large, the mixing (especially back-mixing) becomes inferior
and the temperature distribution spreads, and thus a big motor
is required to drive the stirrer and this is not preferred from
an economic view point. On the other hand, when the ratio is too
small, not-enough thermoters can be inserted in the reactor to monitor the reaction temperature, the monitoring of the
polymerization reaction is not adequate and thus it is
difficult to operate safely. Furthermore, it is impossible to
divide the reactor with baffle plates into multi-reaction
zones and to supply the ionic polymerization catalyst and the
monomers at a plurality of points, and thus the reaction conditions
have limitations and the process becomes industrially
disadvantageous. The ratio of length to diameter of 1 : 1
to 25 : 1 is preferred.

When the residence time in the reaction system is
too long, organic aluminium compounds (e.g. triethylaluminium)
and titanium alkoxides cause the oligomerization of ethylene,
and the resulting oligomers get mixed into the reaction
product as unfavorable low molecular materials. When the
residence time is too short, the reaction micture
flows out of the reactor  before the polymerization reaction
by the ionic polymerization catalyst proceeds sufficiently
so that the predetermined reaction temperature is not
realized or the control of the reaction temperature becomes
difficult. Furthermore, since the reaction mixture flowing out
of the preceding and subsequent autoclave reactors contains
a fair amount of the residual active ionic polymerization
catalyst, the polymerization more or less takes place in the
connecting pipe between the autoclave reactors,
in the pipe between the last autoclave reactor and
the separator and in the separator,  and the reaction
heat produced thereby causes unfavourable side reactions, such as the decomposition of ethylene. Thus, the residence time in the entire reaction system is preferably kept within 350 seconds.

When the residence time in the connecting pipe between the preceding and subsequent reactors is too long, i.e.when the flow velocity is too low, the mixing becomes poorer due to the lowering of the intensity of the turbulence so that the reaction heat, which is generated by the polymerization reaction initiated by a small amount of the active ionic polymerization catalyst contained in the polymerization reaction mixture flowing out of the preceding reactor, makes the temperature distribution in the connecting pipe unstable, hot-spots are produced due to insufficient cooling by the heat exchanger and extraordinary reactions are apt to occur. If the connecting pipe is made longer to obtain a longer residence time, the connecting pipe may be blocked off or a great pressure drop may be produced. These do not favorably affect the process and the properties of the product. On the other hand, when the residence time is too short, the amount of heat removed with the cooling by the heat exchanger is small so that the objects of the present invention such as high conversion, high productivity and high catalytic yield, are not attained. Thus, the residence time in the connecting pipe is preferably kept within 25 seconds.

Preferably, the residence times in the first autoclave reactor and in the second autoclave reactor are, respectively, less than 200 se conds and less than 150
seconds.

With regard to the temperature (Tl) at the outlet
of the preceding autoclave reactor and the temperature (T2)
after cooling by the heat exchanger in the connecting pipe
and just before flowing into the subsequent autoclave reactor,
these temperatures preferably satisfy the following
relationships:

$$280°C \leqq Tl + T2 \leqq 480°C$$
$$20°C \leqq Tl - T2 \leqq 220°C,$$

When the reaction mixture is cooled too much, the connecting
pipe is blocked off due to the raised viscosity of the mixture, a
great pressure drop is produced and the heat transfer efficiency
decreases with the lapse of time, or when the cooling is
insufficient, the obje cts of the present invention such as
high yeild, high productivity, high catalytic yield and high
operational stability can not be attained.  Thus, the temperature T2 should preferably be 130°C or above.  Then, the cooling
of the mixture by the heat exchanger enables the polymerization reaction in the connecting pipe initiated by the
active ionic polymerization catalyst which remains in the
polymerization reaction mixture flowing out of the preceding
autoclave reactor to be controlled and, in combination
with the residence time in the connecting pipe, prevents
the extraordinary reactions caused by the active ionic polymerization catalyst which remains in the connecting pipe and
also improves the controllability of the polymerization reaction in the subsequent autoclave reactor.

A process for the polymerization of ethylene is disclosed, for example, in Japanese Patent Publication (examined) No.19599/1975. However, the reacation mechanisms of the present invention and of the prior art are essentially different since the present invention uses an ionic polymerization catalyst while the process of the publication uses a radical polymerization catalyst. Because of the difference of the catalysts used, it is essential in the present invention to select fairly limited ranges for the amount of energy imparted by the stirrer, the ratio of the length to diameter of the autoclave reactor, the residence time and the extent of cooling in the pipe by the heat exchanger.

A process for the polymerization of ethylene with an ionic polymerization catalyst using two or more autoclave reactors is disclosed, for example, in Japanese Patent Publications (unexamined) Nos. 90512/1980 and 112206/1980. In the former publication, the reactors are connected in parallel. In the latter publication, the reactors are connected either in series or in parallel. When the reactors are in a series, the polymerization reaction mixture from the preceding autoclave reactor is cooled by the introduction of cold ethylene into the connecting pipe and then supplied to the mixing zone in the subsequent autoclave reactor to which no ionic polymerization catalyst is supplied. This process is very different from the process of the invention in which the mixture is cooled by the heat exchanger, and the polymerization is continued in the subsequent autoclave reactor in which the polymerization reaction mixture comes from the preceding autoclave reactor and the ionic polymerization catalyst is supplied thereto. There fore, it is apparent that the present invention uses much simpler equipment and achieves high conversions. This means that the invention is superior to the conventional processes in the industry.

In the present invention, the reaction pressure and the reaction temperature in each autoclave reactor may be selected freely from wide ranges. The reaction pressure can be adjusted by high pressure regulators attached to the outlets of the preceding and subsequent reactors. The maximum pressure in the subsequent reactor is the pressure in the preceding reactor reduced by the pressure drop in the pipe connecting the preceding and subsequent reactors. For the preceding reactor, the high pressure regulators can be attached to the pipe before or after, or before and after the heat exchanger. The reaction temperature in each reactor can be adjusted independently to various values.

As stated above, two or more autoclave reactors are used in the process of the invention. These autoclave reactors may be of the same or different volume. Further, each of these autoclave reactors may, when desired, be divided into two or more reaction zones by an appropriate number of baffle plates, each reaction zone having the same or different volume. Furthermore, when any of the subsequent autoclave reactor(s) is divided into two or more reaction zones, the reaction mixture from the first autoclave reactor and/or the catalyst may be introduced into any of the reaction zones. The latter can be applied to the first autoclave reactor. Moreover, the cooler(s) such as the heat exchanger(s) may be provided at any or all of the connecting pipes when two or more connecting pipes are present. It is essential to provide a cooler such as a heat exchanger on the connecting pipe between the first autoclave reactor and the second autoclave reactor, and no other connecting pipe necessarily required to have a cooler. The introduction of the monomers(s) into each reactor may be effected by the use of at least one feeding pipe.

The catalyst system for ionic polymerization to be used in the process of the invention comprises (A) at least one metal compound in which the metal belongs to one of Groups I to III in the periodic table and (B) at least one transition metal halide in which the transition metal belongs to one of Groups IVa to VIa of the periodic table, usually in a range as conventionally adopted.

In the metal compounds as component (A), the metal is preferably aluminium. Thus, preferred examples of the metal compounds are aluminium hydride, alkylaluminium hydrides (e.g. diethylaluminium hydride, diisobutylaluminium hydride), trialkylaluminiums (e.g.trimethylaluminium, triethylaluminium, triisobutylaluminium, trioctylaluminium, tridodecylaluminium), alkylaluminium halides (e.g.diethyl-aluminium chloride, diisobutylaluminium chloride, ethyl-aluminium sesquichloride, ethylaluminium dichloride), alkyl-aluminium alkoxides (e.g. diethylaluminium ethoxide, diethylaluminium butoxide, diethylaluminium phenoxide) or alkylsiloxalane derivatives.

Examples of the transition metal halides as component (B) are π-allyl or benzyl halides of chromium, zirconium and titanium, titanium (atomic valency, II to IV) chlorides and vanadium (atomic valency, III to V) chlorides. When desired they may be supported on suitable carriers chosen from halides, monohalides and hydrohalides of magnesium, alumina and silicon compounds. They may also be used in the presence of complexing agents such as alcohols, metal alkoxides, alkyl silicates, arylsiloxanes, alkylsiloxanes, ethers and carboxylic acids.

Usually, components (A) and (B) are employed as solutions or dispersions in an inert solvent (e.g. hexane, heptane). The components (A) and (B) and, when used, the inert solvent may be introduced into the autoclave reactors and/or the reaction zones separately or all together. The solution or dispersion comprising the components (A) and/or (B) may be previously prepared and introduced into the autoclave reactors. The amount and composition of the catalyst system to be introduced into each of the autoclave reactors and/or the reaction zones may

- 16 -                    0072165

be the same or different.

In the process of the invention, ethylene or its
mixture with at least one ,other copolymerizable momoner .
may be subjected to polymerization.  Examples of the other
copolymerizable monomers are α-olefins (e.g. propylene,
butene-1, 4-methylpentene-1, hexene-1, octene-1), conjugated
or non-conjugated dienes (e.g. butadiene, isoprene,
dicyclopentadiene, 4-vinylcyclohexene and ethylidene-
norbornene).

In addition to the monomer(s), the polymerization
system may comprise conventional additives such as a molecular weight regulator and an inert diluent.  As the molecular weight regulator, the use of hydrogen in an amount of
not more than 5 % by volume of the monomer(s) is the most
recommendable.  As the inert diluent, propane, butane and
pentane,  may be used alone or in combination, normally
in an amount of not more than 50 % by weight of the
monomer(s).

At least a portion of ethylene is to be fed to the
first autoclave reactor, but the remaining portion of
ethylene and, when used, the other copolymerizable monomers,
the molecular weight regulators, and the inert diluents
may be introduced into any or all of the autoclave reactors
in the same or different amounts and .compositions.

In the process of the invention wherein two or
more autoclave reactors are used, the choice of appropriate
reaction conditions can afford a polymer having an excellent processability with a high conversion and a good catalyst yield. The molecular weight distribution of the polymer is significantly different from the polymer obtained . by the use of a single autoclave reactor. When processed into a shaped product such as a sheet, a film or a molding, such product shows excellent and advantageous physical properties. Accordingly, the polymer produced by the process of the invention is useful :for the manufacture of various products including sheets, films and moldings. In

such manufacture, the polymer of the invention may be employed alone or as a blend with high density polyethylene, ethylene-vinyl acetate copolymer, ethylene-ethyl acrylate copolymer or elastomers.

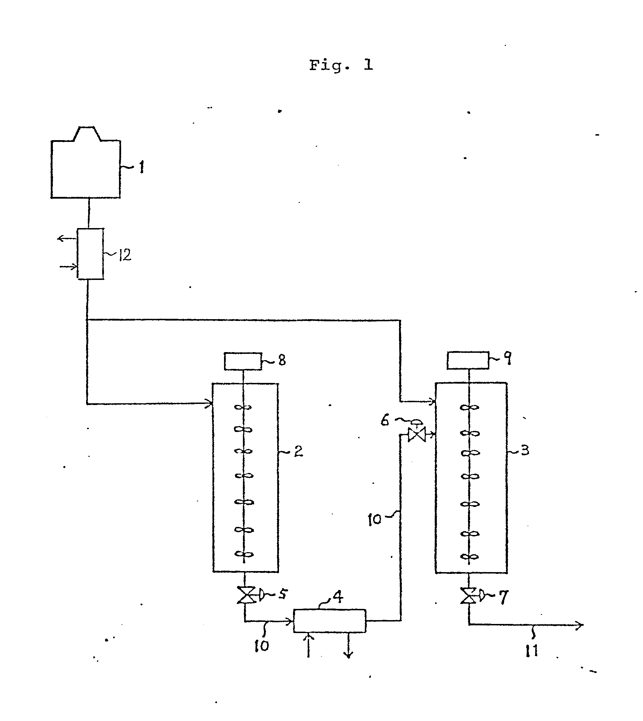

Practical and presently preferred embodiments of the invention are illustratively shown in the following Examples which were conducted by the use of a set of apparatuses as shown in the accompanying drawing wherein the numerals have the following significances: 1 ----- hyper compressor; 2 ----- first autoclave reactor ; 3 -----

second autoclave reactor; 4 ----- heat exchanger; 5, 6, 7 ----- valves; 8, 9 ----- motors for rotating stirrer; 10 ----- connecting pipe; 11 ----- pipe (to a separator as not shown); 12 ----- cooler. Part(s) and % are by weight, unless otherwise indicated.

Example 1

Two autoclave reactors of cylindrical type, of which each was equipped with a stirrer capable of providing a stirring energy of 0.05 KW per 1 liter of the inner volume and had a proportion of length and diameter being 12 : 1, were used. Gaseous ethylene containing 0.2 % by volume of hydrogen as the molecular weight regulator was compressed in a hyper compressor 1 to 1500 kg/cm$^2$ and cooled in a cooler 12 to 30°C. The 90 % portion of the ethylene gas was introduced into the first autoclave reactor 2, and the remaining 10 % portion was introduced into the second autoclave reactor 3. The feed rate of the ethylene gas was controlled so as to ensure the residence times of 45 seconds and 5 seconds respectively in the entire reaction system and in the connecting pipe 10. Into the first autoclave reactor 2, a heptane slurry of $TiCl_3 \cdot 1/3AlCl_3$ comprising triethyl aluminum in an amount of 10 mol to one mol of titanium as the ionic polymerization catalyst was introduced in an amount of 45 ppm to the ethylene gas, and the polymerization was carried out at 240°C. In the first autoclave reactor 2, nearly 14 % of the ethylene gas was converted into polyethylene. The reaction mixture was cooled to 180°C in a heat exchanger 4 and introduced into the second autoclave reactor 3. The same ionic polymerization catalyst as used in the first autoclave reactor 2 was added thereto in an amount of 50 ppm. The polymerization was further carried out at 260°C. The pressure was adjusted respectively to

1500 kg/cm$^2$ and 1200 kg/cm$^2$ by the aid of the valves 6 and 7. The reaction mixture was discharged from the second autoclave reactor 3 through the pipe 11 and sent to a separator wherein the produced polymer and the unreacted ethylene were separated. The unreacted ethylene was recycled for the use as the starting material.

The total conversion to the polymer was about 23 %. The temperature in the autoclave reactors 2 and 3 were nearly uniform. The temperature in the connecting pipe 10 changed smoothly, and good cooling of the reaction mixture was ensured. The control of the reaction temperature was good, and the operation was well stabilized. In the case using a single autoclave reactor, the conversion was only about 15 %.

The produced polymer had a density of 0.950 g/ml and a melt index of 2.2 g/10 min (measured according to the method as described in JIS K6760). The polymer showed improved processability such as depression in die pressure, decrease in extruding energy and increase in output. It also showed improved tensile strength, impact strength, etc. when processed in a molded product such as a sheet or a film.

Example 2

The same apparatus as employed in Example 1 was used. Gaseous ethylene containing 1 % by volume of hydrogen as the molecular weight regulator was compressed to 2500 kg/cm$^2$ and cooled to 30°C. The 75 % portion of the ethylene gas was introduced into the first autoclave reactor 2, and the remaining 25 % portion was introduced into the second autoclave reactor 3. In comparison with Example 1, the residence time in the first autoclave reactor 2 and the connecting pipe 10 was prolonged by 17 % and that in the second autoclave reactor 3 was identical. In the autoclave reactors 2 and 3, the ionic polymerization catalyst as produced in the following manner was used: n-butylmagnesium chloride and silicon tetrachloride were reacted in di-n-butyl ether, the resulting solid product was reacted with a titanium compound in liquid obtained by the reaction of titanium tetrachloride with diethylamine in monochlorobenzene, and the thus prepared solid catalyst comprising 3 % by weight of titanium was admixed with triethyl aluminum in a 5 molar amount to one mol of titanium and heptane to obtain a heptane slurry. Into the first autoclave reactor 2, the heptane slurry was introduced so as to use the said solid catalyst in an amount of 15 ppm to the ethylene gas, and the polymerization was carried out at 190°C. The pressure in the first autoclave reactor 2 was adjusted to 2400 kg/cm$^2$ by the aid of the valve 5. The reaction mixture was cooled to 140°C in a heat exchanger 4 and then introduced into the second autoclave reactor 3. The said heptane slurry was introduced into the second autoclave reactor 3 so as to use the solid catalyst in an amount of 20 ppm, and the polymerization was further carried out at 250°C. The pressure in the second autoclave reactor 3 was adjusted to 1200 kg/cm$^2$ by the aid of the valve 7. Then, the reaction mixture was discharged through the pipe 11 and sent to a separator wherein the produced polymer and the unreacted ethylene were separated. The unreacted ethylene was recycled for the use as the starting material.

The total conversion was about 20 % and showed a good operation stability. The conversions in the case using a single autoclave reactor (Comparison 1) and in the case not effecting the cooling with a heat exchanger in the connecting pipe (Comparison 2) were respectively about 13.5 % and about 16 %.

The physical properties of the polymers as produced are shown in Table 1, from which it is understood that the polymer obtained in the invention has excellent physical properties in comparison with the polymers obtained in Comparisons 1 and 2.

Table 1

| Polymer | Measuring method | Invention | Comparison 1 | Comparison 2 |
|---|---|---|---|---|
| Melt index (g/10 min) | JIS K6760 | 20 | 20 | 20 |
| Density (g/ml) | " | 0.956 | 0.956 | 0.956 |
| Tensile strength $(kg/cm^2)$ | " | 230 | 200 | 190 |
| Elongation (%) | " | 700 | 500 | 500 |
| Izod impact (at 20°C) (kg.cm/cm) | JIS K7110 | 6.0 | 4.0 | 4.0 |
| Injection molding, length of spiral flow (cm) | *1) | 130 | 120 | 125 |

Note: *1) Length of the product prepared by injection molding of the polymer into the form of a spiral of semi-round shape of 7.5 mm in diameter under the following conditions: injection molding machine, Model IS-80A, manufactured by Toshiba Machine Mfg. Co., Ltd.; temperature of mold, 40°C; oil temperature, 30°C; injection temperature, 230°C; injection pressure, 65 $kg/cm^2$; injection cycle, injection 10 sec. and cooling 20 sec; flow control valve opened.

Example 3

The same apparatus as employed in Example 1 was used. Gaseous ethylene containing 0.6 % by volume of hydrogen as the molecular weight regulator, 10 % by weight of propane as the inert diluent and 16 % by weight of butene-1 as the copolymerizable monomer was compressed to 1000 kg/cm$^2$ and cooled to 30°C. The 75 % portion of the gas was introduced into the first autoclave reactor 2, and the remaining 25 % portion was introduced into the second autoclave reactor 3. The residence times in the first autoclave reactor 2 and the connecting pipe 10 and in the second autoclave reactor 3 were as in Example 2. In the autoclave reactors 2 and 3, the ionic polymerization catalyst as produced in the following manner was used: n-propylmagnesium chloride and silicon tetrachloride were reacted in di-n-propyl ether, the resulting solid product was reacted with a titanium compound in liquid obtained by the reaction of titanium tetrachloride with methanol in monochlorobenzene, and the thus prepared solid catalyst comprising 3 % by weight of titanium was admixed with trioctyl aluminum in a 7 molar amount to one mol of titanium and heptane to obtain a heptane slurry. Into the first autoclave reactor 2, the heptane slurry was introduced so as to use the said solid catalyst in an amount of 20 ppm to the gas, and the polymerization was carried out at 200°C. The pressure in the first autoclave reactor 2 was adjusted to 1000 kg/cm$^2$ by the aid of the valve 6. The reaction mixture was cooled to 160°C in the heat exchanger 4 and then introduced into the second autoclave reactor 3. The said heptane slurry was introduced into the second autoclave reactor 3 so as to use the solid catalyst in an amount of 30 ppm, and the polymerization was further carried out at 260°C. The pressure in the second autoclave reactor 3 was adjusted to 800 kg/cm$^2$ by the aid of the valve 7. Then, the reaction mixture was discharged through the pipe 11 and sent to a separator wherein the produced polymer and the unreacted gas were separated. The unreacted gas was recycled for the use as the starting material.

The total conversion was about 20 % and showed a good operation stability. The conversion in the case using a single autoclave reactor was about 14 % (Comparison 1).

The physical properties of the polymers as produced are shown in Table 2 wherein the physical properties of the product from radical polymerization (Comparison 2) are also shown, from which it is understood that the polymer obtained in the invention has excellent physical properties in comparison with the polymers obtained in Comparisons 1 and 2.

Table 2

| Polymer | Measuring method | Invention | Comparison 1 | Comparison 2 |
|---|---|---|---|---|
| Melt index (g/10 min) | JIS K6760 | 2.1 | 2.0 | 2.0 |
| Density (g/ml) | " | 0.920 | 0.920 | 0.920 |
| Tensile strength $(kg/cm^2)$ | " | 270 | 250 | 170 |
| Elongation (%) | " | 800 | 700 | 600 |
| Tensile impact strength $(kg.cm/cm^2)$ | ASTM D1822[*1] | 800 | 650 | 200 |
| Maximum take-up speed (m/min) | *2) | 90 | 75 | 15 |
| Melt tension (g) | *3) | 3.0 | 5.5 | 10 |
| Injection molding, length of spiral flow (cm) | *4) | 90 | 80 | 85 |

Note: *1) Type S specimen used; *2) take-up speed immediately before breaking when stretched with a constant extrusion amount at 150°C (measured by the aid of a melt tension tester manufactured by Toyo Seiki Co., Ltd.); *3) tension at maximum take-up speed; *4) same as in Table 1.

## Example 4

Two autoclave reactors of cylindrical type, of which the first one 2 was equipped with a stirrer capable of providing a stirring energy of 0.1 KW per 1 liter of the inner volume, had a proportion of length and diameter being 17 : 1 and was divided into three reaction zones by two baffle plates and the second one 3 was equipped with a stirrer capable of providing a stirring energy of 0.05 KW per 1 liter of the inner volume and had a proportion of length and diameter being 12 : 1, were used. Gaseous ethylene containing 0.5 % by volume of hydrogen as the molecular weight regulator, 6 % by weight of butane as the inert diluent and 12 % by weight of propylene as the copolymerizable monomer was compressed in a hyper compressor 1 to 1500 kg/cm$^2$ and cooled to 30°C. The 75 % portion of the ethylene was introduced into the first autoclave reactor 2, and the remaining 25 % portion was introduced into the second autoclave reactor 3. The feed rate of the gas was controlled so as to ensure the residence times of 90 seconds and 15 seconds respectively in the entire reaction system and in the connecting pipe 10. At the first autoclave reactor 2, the heptane slurry as employed in Example 3 was introduced into the three reaction zones respectively in amounts of 4, 7 and 18 ppm in terms of the solid catalyst to the gas, and the polymerization was carried out while keeping the three reaction zones respectively at 200°C, 200°C and 260°C. The reaction mixture was cooled to 180°C in the heat exchanger 4 and introduced into the second autoclave reactor 3. The same solid catalyst as used in the first autoclave reactor 2 was added thereto in an amount of 10 ppm. The polymerization was further carried out at 260°C. The pressure was adjusted respectively to 1500 $kg/cm^2$ and 1200 $kg/cm^2$ by the aid of the valves 6 and 7. The reaction mixture was discharged from the second autoclave reactor 3 through the pipe 11 and sent to a separator wherein the produced polymer and the unreacted gas were separated. The unreacted gas was recycled for the use as the starting material.

The total conversion of the polymer was about 19 %, and the operation stability was excellent. The produced polymer had a density of 0.925 g/ml and a melt index of 1.0 g/10 min and showed excellent physical properties in comparison with the polymers obtained by the use of a single autoclave reactor or by radical polymerization under elevated temperature and pressure.

Example 5

The same apparatuses as employed in Example 4 but dividing the second autoclave reactor 3 in two reaction zones by a baffle plate were used. Gaseous ethylene containing 0.5 % by volume of hydrogen as the molecular weight regulator, 4 % by weight of propane as the inert diluent and 15 % by weight of butene-1 as the copolymerizable monomer was compressed to 1500 $kg/cm^2$ and cooled to 30°C. The 80 % portion of the gas was introduced into the first autoclave reactor 2, and the remaining 20 % portion was introduced into the second autoclave reactor 3. The residence time in the entire reaction system was the same as in Example 4, and that in the connecting pipe 10 was 7 % smaller than that in Example 4. In the first autoclave reactor 2, the ionic polymerization catalyst as produced in the following manner was used: n-butylmagnesium chloride, phenol and ethyl benzoate were reacted, the resulting product was reacted with titanium tetrachloride, and the thus prepared solid catalyst comprising 2 % by weight of titanium was admixed with triethyl aluminum in a 5 molar amount to one mol of titanium and heptane to obtain a heptane slurry. At the first autoclave reactor 2, the heptane slurry was introduced into the three reaction zones so as to use the said solid catalyst respectively in amounts of 5, 9 and 20 ppm to the gas, and the polymerization was carried out while keeping the three reaction zones respectively at 200, 210 and 260°C. The reaction mixture was cooled to 180°C in the heat exchanger 4 and then introduced into the first reaction zone of the second autoclave reactor 3. The same heptane slurry as in Example 4 was introduced into the two reaction zones of the second autoclave reactor 3 so as to use the solid catalyst respectively in amounts of 9 and 15 ppm, and the polymerization was further carried out respectively at 230°C and 260°C. The pressures were adjusted to 1500 kg/cm$^2$ and 1000 kg/cm$^2$ respectively by the aid of the valves 5 and 7. Then, the reaction mixture was discharged through the pipe 11 and sent to a separator wherein the produced polymer and the unreacted gas were separated. The unreacted gas was recycled for the use as the starting material.

The total conversion was about 20 % and showed a good operation stability. The density and melt index of the produced polymer were respectively 0.922 g/ml and 1.5 g/10 min.

Example 6

Using the same apparatuses and reaction conditions as in Example 1 but keeping the temperatures in the autoclave reactors 2 and 3 respectively at 200°C and 230°C, the polymerization was carried out. $TiCl_3.1/3AlCl_3$ in the heptane slurry added to the autoclave reactors 2 and 3 were respectively in amounts of 33 ppm and 41 ppm. The total conversion of the polymer was about 16 %.

For comparison, the polymerization was carried out using a single autoclave reactor (Comparison 1) or not using the heat exchanger 4 in the connecting pipe 10 (Comparison 2) under the reaction conditions giving the same conversion of the polymer as above. In Comparison 1, the reaction temperature was 270°C and the amount of the catalyst was 97 ppm. In Comparison 2, the reaction temperatures at the autoclave reactors 2 and 3 were respectively 240°C and 265°C and the amounts of the catalyst at those autoclave reactors were respectively 45 ppm and 40 ppm.

Thus, in order to achieve the same conversion of the polymer as in the invention, a higher reaction temperature and a larger amount of the catalyst are needed in the cases of Comparisons 1 and 2.

0072165

CLAIMS :

1. A process for preparing an ethylene polymer
by polymerization of ethylene or its mixture with at least
one other copolymerizable monomer at an elevated temperature
under an elevated pressure, wherein the polymerization is carried
out in the presence of an ionic polymerization catalyst in
at least two autoclave reactors, including a first autoclave
reactor and a second autoclave reactor which are connected
in series by means of at least one connecting pipe provided
with a cooler thereon and the polymerization is initiated
in the first autoclave reactor, the reaction mixture is
discharged therefrom through the connecting pipe, cooled in the
cooler and passed to the second autoclave reactor, and the
polymerization is further continued therein.

2. A process as claimed in Claim 1 wherein the
ionic polymerization catalyst comprises at least one metal
compound in which the metal belongs to one of Groups I to
III of the periodic table, and at least one transition metal
halide in which the transition metal belongs to one of
Groups IVa to VIa of the periodic table.

3. A process as claimed in Claim 1 or Claim 2
wherein the polymerization is carried out at a temperature of
at least $130^{\circ}$C.

0072165

4. A process as claimed in any one of the preceding claims wherein the polymerization is carried out under a pressure of at least 300 kg/cm$^2$.

5. A process as claimed in any one of the preceding claims wherein the reaction mixture discharged from the first autoclave reactor is cooled in the cooler to a temperature (T2) which satisfies the following relationships:

$$280°C \leqq T1 + T2 \leqq 480°C$$
$$20°C \leqq T1 - T2 \leqq 220°C$$
$$130°C \leqq T2$$

wherein T1 is the temperature at the outlet of the first autoclave reactor.

6. A process as claimed in any one of the preceding claims wherein at least one monomer is added to the second autoclave reactor.

7. A process as claimed in any one of the preceding claims wherein each of the autoclave reactors is equiped with a stirrer which can impart a stirring energy of at least 0.02 KW per 1 liter of the inner volume of the reactor to the reaction mixture in the reactor.

8. A process as claimed in any one of the preceding claims wherein each autoclave reactor is of cylindrical form in which the ratio of length to diameter is from 1 : 1 to 25 : 1.

9. A process as claimed in any one of the preceding claims wherein the residence time in the entire polymerization system and that in connecting pipe are, respectively, not more than 300 seconds and not more than 25 seconds.

Fig. 1

**European Patent Office**

**EUROPEAN SEARCH REPORT**

0072165

Application number

EP 82 30 4046

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,Y | DERWENT JAPANESE PATENTS REPORT, vol. 75, no. 28, 8th August 1975, page 4, no. A17, Derwent Publications Ltd, London (GB); & JP - B - 75 019 599 (SUMITOMO CHEMICAL CO. LTD) (23-02-1968) *Abstract* | 1 | C 08 F 10/02 C 08 F 4/62 |
| Y | EP-A-0 013 246 (SOCIETE CHIMIQUE DES CHARBONNAGES) *Claims 1,2,7,8; page 2, line 34 - page 3, line 24; page 4, lines 28-32; pages 7,8; example 1* | 1-4 | |
| Y | GB-A-1 548 203 (STAMICARBON) *Claims 1-5,10,15,17; page 4, lines 108-113; figure* | 1,2 | |

|  | TECHNICAL FIELDS SEARCHED (Int. Cl. 3) |
|---|---|
|  | C 08 F 10/00 C 08 F 10/02 C 08 F 10/04 C 08 F 10/06 C 08 F 10/08 C 08 F 10/10 C 08 F 10/12 C 08 F 10/14 C 08 F 110/00 C 08 F 110/02 C 08 F 110/04 C 08 F 110/06 C 08 F 110/08 C 08 F 110/10 C 08 F 110/12 C 08 F 110/14 C 08 F 210/00 C 08 F 210/02 |

-/-

The present search report has been drawn up for all claims

| Place of search THE HAGUE | Date of completion of the search 15-11-1982 | Examiner WEBER H. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

European Patent Office

## DOCUMENTS CONSIDERED TO BE RELEVANT

Page 2

| Category | Citation of document with indication, where appropriate, of relevant passages | Relevant to claim |
|---|---|---|
| | | |

CLASSIFICATION OF THE APPLICATION (Int. Cl. ³)

TECHNICAL FIELDS SEARCHED (Int. Cl. ³)

C 08 F 210/04
C 08 F 210/06
C 08 F 210/08
C 08 F 210/10
C 08 F 210/12
C 08 F 210/14
C 08 F 210/16
C 08 F   4/62
C 08 F   4/64
C 08 F   4/68
C 08 F   4/70

The present search report has been drawn up for all claims

| Place of search | Date of completion of the search | Examiner |
|---|---|---|
| THE HAGUE | 15-11-1982 | WEBER H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82